Europäisches Patentamt

(19) European Patent Office

Office européen des brevets

(11) Publication number: **0 216 060**
**B1**

(12) **EUROPEAN PATENT SPECIFICATION**

(45) Date of publication of the patent specification:
**17.10.90**

(21) Application number: **86110020.4**

(22) Date of filing: **21.07.86**

(51) Int. Cl.⁵: **A01F 12/18, A01F 7/00,**
**A01D 41/12, A01D 41/00**

(54) **Convertible combine rotor.**

(30) Priority: **24.07.85 US 758313**

(43) Date of publication of application:
**01.04.87 Bulletin 87/14**

(45) Publication of the grant of the patent:
**17.10.90 Bulletin 90/42**

(84) Designated Contracting States:
**BE DE FR GB IT**

(56) References cited:
**EP-A- 0 097 988**
**DE-A- 2 233 018**
**GB-A- 10 793**
**US-A- 855 461**
**US-A- 4 505 279**

(73) Proprietor: **J. I. Case Company, 700 State Street, Racine,**
**WI 53404(US)**

(72) Inventor: **Dunn, Neil C., 1803 Hillcrest, Trenton**
**Missouri 64683(US)**
Inventor: **McMillen, Richard E., 17550 S. Williamsburg,**
**Plainfield, Illinois 60544(US)**
Inventor: **Ricketts, Jon E., 124 Malibu Drive,**
**Bolingbrook, Ill. 60439(US)**

(74) Representative: **Strehl, Schübel-Hopf, Groening,**
**Maximilianstrasse 54 Postfach 22 14 55,**
**D-8000 München 22(DE)**

## Description

This invention relates to a rotor for a rotary threshing combine or the like comprising a generally cylindrical drum defining an outer wall portion and a plurality of mounting means secured to the surface of said well portion and connector means for releasably connecting said thresher elements to said mounting means, whereby the rotor is convertible to treat various crops in the manner desired throughout the longitudinal axis of said rotor, see, e.g. US-A 4 505 279.

EP-A 97 988 discloses a threshing cylinder for a combine harvester wherein the cylinder is formed by a number of recessed notches along the circumference thereof. Each notch is defined by a bottom surface and two opposing side surfaces inclined towards each other and extending generally radially outwardly from the bottom surface. A crop harvesting member having a base member received within each recessed within each recessed notch projects radially outwardly from the disc members for rotation along a common circumferential path. The crop harvesting members are retained in place on each disc member by a wedge-shaped block radially positioned by a bolt threaded into the disc member so that the threshing cylinder is quickly and easily converted between grain and rice harvesting modes by exchanging crop harvesting members without completely removing the entire threshing cylinder from the harvesting machine.

A common and well known form of threshing machine is the rotary combine. In a rotary combine, the grain or other crop harvested in the field is fed by a conveyor section into the threshing section containing the threshing rotor. The rotor itself is an elongated cylindrical member which may be positioned transversely or longitudinally of the direction of travel of the combine, but usually the latter. Thresher vanes or bars are permanently affixed to the outer surface of the rotor, usually arranged in a simple helical pattern, and it is those elements which do the work of separating the edible grain from the remaining plant material. Various agitator, shakers, graders, and screens are then utilized to further separate the different plant components.

In rotary threshing, it is customary to use different rotors for harvesting different crops. For example, a rotor having long straight and helical surface elements is most efficient for the harvesting of small grain, corn, and soybeans. On the other hand, a rotor having short helical sections is most efficient for the harvesting of rice, edible beans, and damp weedy crops. Use of a rotor mismatched to the particular crop being harvested can result in both inefficient waste of the primary crop and frequent jamming of the rotor and down time for the entire combine.

A typical combine is, of course, a rather massive and expensive vehicle. The rotor of a rotary combine is itself quite heavy and unwieldy, weighing far in excess of what might be liftable mannually by a number of people. Even assuming then that a number of different rotors are at hand, the changing of one rotor for another in a given combine is a difficult operation requiring the use of auxiliary lifting cranes, or the like. Frequently, the practical effect of this situation is to severely limit the harvesting applications for which a combine can be used.

It would be most desirable if a single rotary combine could be readily adapted or converted for a wide variety of harvesting applications as required. Similarly, it would be most desirable if the ready convertibility of the combine could be accomplished without removal of the threshing rotor therefrom.

The present invention has the object to provide a combine which is readily convertible for use with any crop to overcome the problems described above. The convertibility of the combine is readily achieved without requiring removal of the rotor from the combine.

As to achieve this object the invention is characterized in that said mounting means comprises individual lugs rigidly secured to the surface of said drum and projecting outwardly therefrom and forming arrays of helical rows, circumferential rows and longitudinal rows, thresher elements interchangeably and releasably connectable to said individual lugs to form, as desired, longitudinal, circumferential, helical, or combinations of such orientations of such thresher elements to condition the rotor to handle various crops.

The subclaims disclose further advantageous features of the invention.

Briefly, the invention comprises a cylindrical drum rotor of basically conventional welded construction. On the outer surface, the rotor has a plurality of upstanding lugs elded to its outer surface and over the full longitudinal length thereof. The lugs are arranged and spaced to provide an array of patterns including helical rows, longitudinal rows, and circumferential rows over the entire surface of the drum.

Each of the lugs is formed with means for accommodating releasable attachment thereto of separate thresher elements. Cooperating with the lugs is a variety of specially and differently shaped thresher elements. Some elements are adapted to be attached to a single lug. Other elements comprise straight bars adapted to be connected to two lugs. Still other elements comprise segments of a helix and are adapted to be mounted to a plurality of angularly related lugs. In addition to their configuration, the thresher elements may be formed with a variety of outer working surfaces. The various thresher elements may be mounted on and disconnected from the lugs so that any desired pattern of threshing may be readily achieved to suit the particular crop and harvesting conditions being encountered. Mounting and removal of the thresher elements is easily achieved with the use of common nuts and bolts and wrenches. The invention thus may be said to provide a combine rotor which is universally convertible for any desired operation.

Numerous other advantages and features of the present invention will become readily apparent from the following detailed description of the invention, from the claims, and from the accompanying drawings.

## Brief Description of the Drawings

In the accompanying drawings forming a part of the specification, and in which like numerals are employed to designate like parts throughout the same,

FIGURE 1 is a diagrammatic view of an agricultural combine illustrating the general location of the threshing rotor therein;

FIG. 2 is an elevational view of a threshing rotor embodying the principles of the invention removed from the combine;

FIG. 3 is a top plan view of a mounting lug;

FIG. 4 is an exploded, fragmentary, perspective view of a mounting lug and associated thresher element;

FIG. 5 is a plan, developed view of the rotor drum; and

FIGS. 6 through 17 are top plan and bottom plan views, respectively, of six representative thresher elements connectable to the rotor.

## Detailed Description of the Invention

Referring with greater particularity to the various figures of the drawings, it will be seen that the reference numeral 10 indicates generally an agricultural combine as utilized in a typical harvesting and threshing operation. The combine 10 comprises the conventional portions, including a reel 12 for raking the crop toward the header section 14 which carries a cutter head (not shown) and a conveyor (not shown) for transporting the severed crop rearwardly toward the vehicle 16 which contains the threshing section. A threshing rotor 20 embodying the principles of the invention is rotatably mounted in the vehicle 16 and suitable drive means (not shown) are provided for rotating the rotor and actuating the other moveable members of the combine in conventional fashion. In the embodiment illustrated, the rotor 20 is mounted with its longitudinal axis in substantial alignment with the direction of travel of the combine although the same could likewise be mounted transversely to the travel depending on the design of the particular combine.

Rotor 20 comprises an elongated drum 22 having a cylindrical wall 24, a rear end wall 26, and a front end wall 28. Projecting from the front end wall 28 are a mounting shaft 30 and a plurality of vanes or impeller blades 32 which serve to convey the severed crop material rearwardly to be acted upon by the outer surface of the cylindrical wall 24.

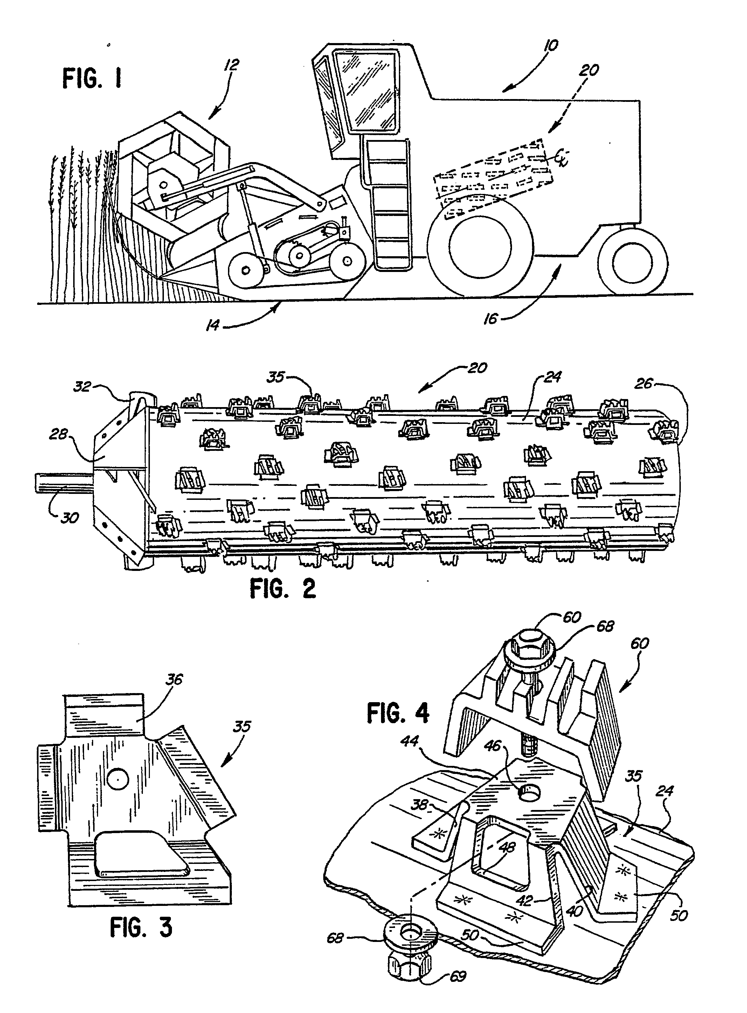

A plurality of mounting lugs 35 is rigidly secured, as by welding, to the cylindrical wall 24. As seen in FIGS. 3 and 4 of the drawings, mounting lug 35 comprises an open, frusto-pyramidal member having a front or leading wall 36, sidewalls 38 and 40, and a rear or trailing wall 42, said walls tapering upwardly toward an integral top wall 44. Top wall 44 is provided with a connector-receiving hole 46 and the rear wall 42 is formed with an access opening 48 dimensioned to permit entry into the interior of the lug 35 by a tool or finger for purposes which will become apparent as the description proceeds. Each of the walls 36, 38, 40, and 42 comprises a bottom flange 50 which is rigidly secured to the cylindrical wall 24 by suitable welding.

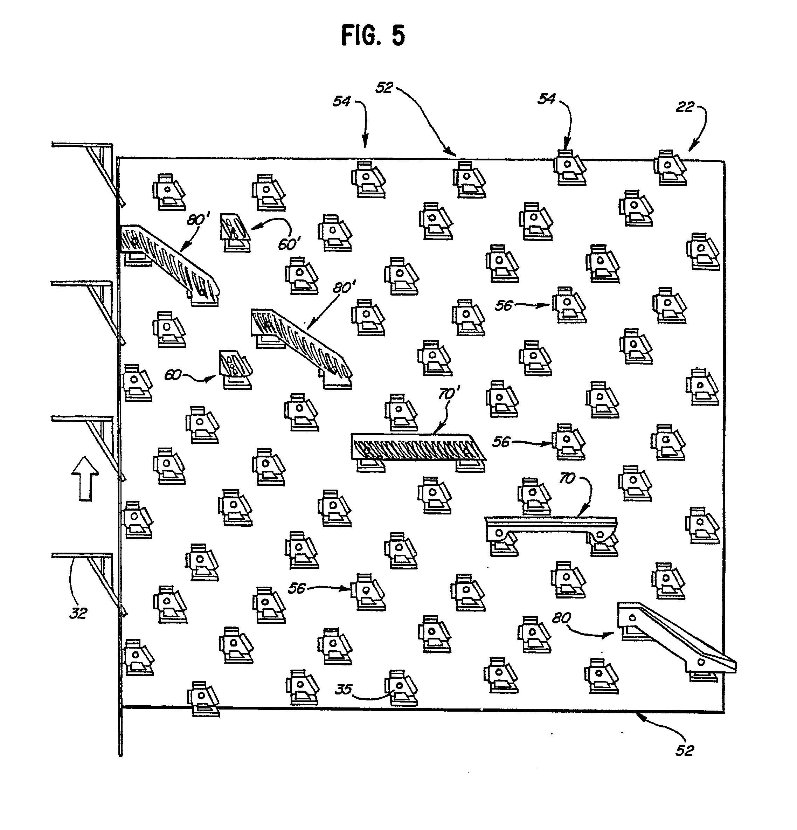

Mounting lugs 35 are secured to the cylindrical wall 24 to provide an array of helical rows, circumferential rows and longitudinal rows over the entire surface of said wall. A preferred arrangement of the lugs 35 is illustrated in FIG. 5 of the drawings. It will there be seen that the lugs 35 form helical rows such as 52, circumferential rows such as 54, and staggered longitudinal rows such as 56. Rotation of the drum 22 would normally be in the upward direction as indicated by the arrow in FIG. 5, so that the closed front walls 36 of the lugs 35 are leading and contact the crop material first.

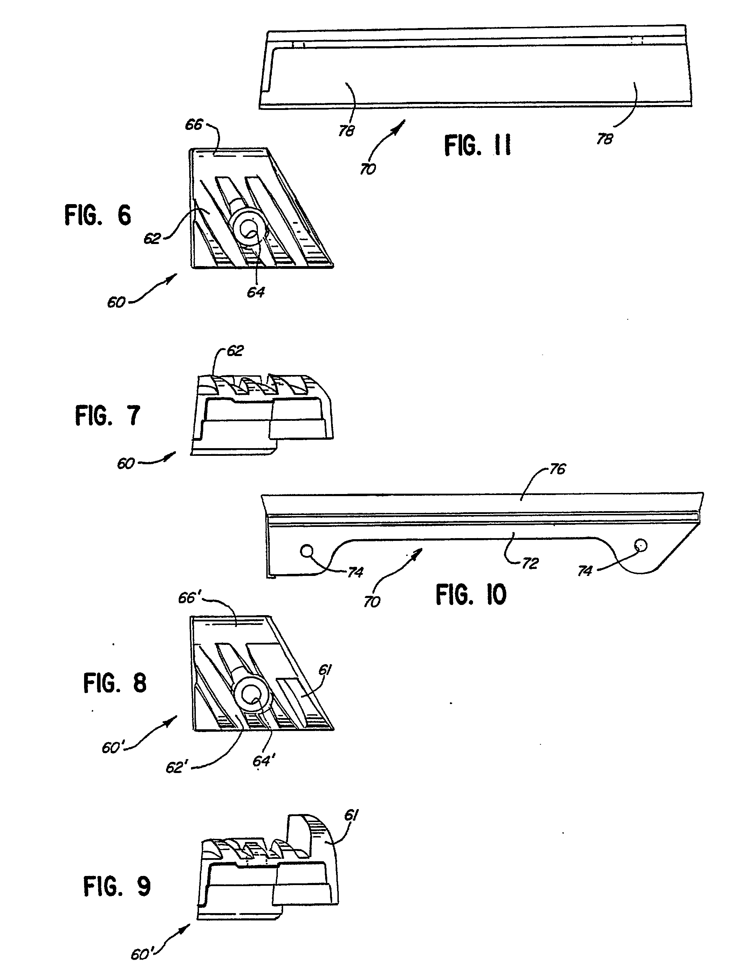

Thresher elements of various forms and shapes are selectively connectable to the lugs 35 as required. In FIGS. 6 and 7, there is shown a bar rasp 60 having a serrated top wall 62 formed with a connector-receiving hole 64 therein. Rasp bar 60 has a tapered front wall 66 and comprises a generally frusto-pyramidal form which opens to the rear thereof and is of complementary configuration with the lug 35. The rasp bar 60 thus may be connected in contour-accommodating relationship to a lug 35 with suitable connectors such as bolts 67, washers 68 and nuts 69, with the lug opening 48 providing access for a suitable tool for the connection or removal of such connectors.

FIGS. 8 and 9 illustrate a rasp bar 60' of similar configuration and operation, but having an additional rear spike 61 projecting from the top wall 62'.

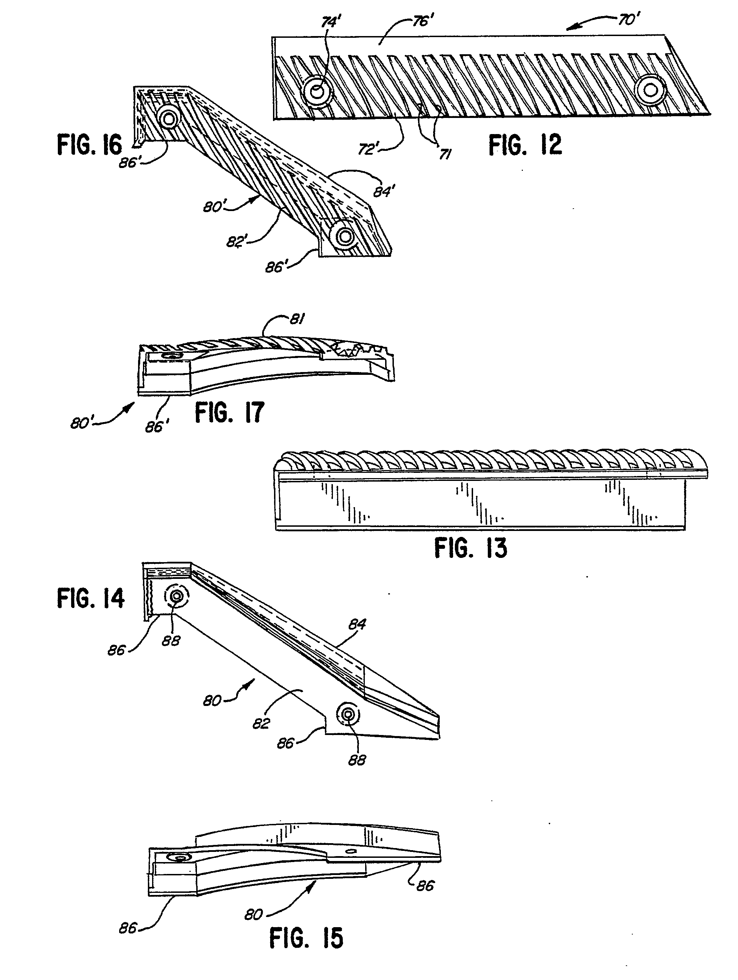

FIGS. 10 and 11 illustrate a straight bar 70 comprising an elongated top wall 72 formed with a pair of connector-receiving openings 74,74, a solid front wall 76, and a pair of hollow end segments 78,78 adapted to fit over a pair of lugs 35 in substantial contour accommodating relationship. As seen in FIG. 5, the bar 70 is connectable to a pair of longitudinally aligned lugs 35.

In FIGS. 12 and 13, there is illustrated a straight bar 70' of substantially identical configuration and operation, but in which the top wall 72' is formed with rasps or serrations 71.

FIGS. 14 and 15 illustrate a helical kicker bar 80 comprising a top wall 82, a solid front wall 84, and a pair of end portions 86,86 adapted to receive therein a pair of lugs 35. Top wall 82 is formed with connector-receiving openings 88,88. It will be noted that the kicker bar 80 is formed with curvature as the arc of a helix complementary to the helical curvature of the cylindrical wall 24. As illustrated in FIG. 5, the kicker bar 80 thus may be connected to a pair of helically aligned lugs 35.

In FIGS. 16 and 17, there is illustrated a helical rasp-kicker bar 80' of substantially identical configuration and operation, but in which the top wall 82' is formed with rasps or serrations 81.

As illustrated in FIG. 5, the various thresher elements may be readily and releasably connected to the rotor 20 in an almost limitless variety of patterns as desired or required for the most efficient threshing operations.

It should be understood that other shapes and forms of thresher elements than the six here described may be utilized, it being necessary only that they be releasably connectable to one or a pair of lugs as indicated. Similarly, other patterns and arrangements of the lugs 35 may be employed.

It will be readily observed from the foregoing detailed description of the invention and illustrative embodiments thereof that numerous variations and modifications may be effected by those skilled in the art within the scope of the claims.

## Claims

1. A rotor (20) for a rotary threshing combine or the like comprising a generally cylindrical drum (22) defining an outer wall portion (24) and a plurality of mounting means secured to the surface of said wall portion and connector means (67, 68, 69) for releasably connecting thresher elements (60, 70, 80) to said mounting means, whereby the rotor (20) is convertible to treat various crops in the manner desired throughout the longitudinal axis of said rotor (20), characterized in that said mounting means comprises individual lugs (35) rigidly secured to the surface of said drum and projecting outwardly therefrom and form arrays of helical rows (52), circumferential rows (54) and longitudinal rows (56), thresher elements (60, 70, 80) interchangeably and releasably connectable to said individual lugs (35) to form, as desired, longitudinal, circumferential, helical, or combinations of such orientations of such thresher elements (60, 70, 80) to condition the rotor (20) to handle various crops.

2. A rotor according to claim 1, characterized in that said lugs (35) have an opening (46) formed in a top surface thereof adapted to cooperate with said connector means (67, 68, 69).

3. A rotor according to claim 2, characterized in that each of said thresher elements (60, 70, 80) comprises an inner surface of substantially complementary configuration with said lugs and a connector-receiving opening (64) between said inner surface and the outer surface thereof, said connector-receiving opening (64) being in registry with said lug opening (46) when the element is operationally positioned on said lug (35).

4. A rotor according to claim 3, characterized in that said connector means comprises threaded bolts and nuts (67, 69), said lugs (35) comprising an opening (46) in a wall thereof to provide access for connecting and disconnecting a paired nut (69) and bolt (67).

5. A rotor according to claim 3, characterized in that said thresher elements (60) comprise short straight bars (60) having a rasp outer surface (62), each of said short straight bars being connectable to a single lug (35).

6. A rotor according to claim 5, characterized in that said short straight bars (60) comprise a spike (61) projecting integrally from said rasp outer surface (62).

7. A rotor according to claim 3, characterized in that said thresher elements comprise elongated straight bars (70) having a pair of said inner surfaces and connector-receiving openings (74), said elongated straight bars being connectable to a longitudinally aligned pair of said lugs (35).

8. A rotor according to claim 7, characterized in that said elongated straight bars (70) comprise a rasp (71) on the outer surface thereof.

9. A rotor according to claim 3, characterized in that said thresher elements comprise elongated helical bars (80) having a pair of said inner surfaces and connector-receiving openings (88), said helical bars (80) being connectable to a helically aligned pair of said lugs (35).

10. A rotor according to claim 9, characterized in that said helical bars (80) comprise a rasp (81) on the outer surface thereof.

## Patentansprüche

1. Ein Rotor (20) für eine Rotordreschmaschine oder dergl., bestehend aus einer im allgemeinen zylindrischen Trommel (22) mit einem Außenwandteil und einer Mehrzahl von Befestigungsmitteln, die an der Oberfläche des genannten Wandteils befestigt sind, und Verbindungsmitteln (67, 68, 69) zur lösbaren Verbindung von Dreschelementen (60, 70, 80) mit den genannten Befestigungsmitteln, wodurch der Rotor (20) konvertibel ist, um verschiedene Getreide in der gewünschten Weise entlang der Längsachse des Rotors (20) zu behandeln, dadurch gekennzeichnet, daß die Befestigungsmittel einzelne Ansätze (35) umfassen, die an der Oberfläche der Trommel starr befestigt sind und von dieser nach außen vorstehen sowie Gruppierungen von schraubenförmigen Reihen (52), sich über den Umfang erstreckenden Reihen (54) sowie Längsreihen (56) bilden, wobei die Dreschelemente (60, 70, 80) mit den einzelnen Ansätzen (35) austauschbar und lösbar verbindbar sind, um, wie gewünscht, sich längs erstreckende, über den Umfang erstreckende, schraubenförmige oder Kombinationen solcher Ausrichtungen derartiger Dreschelemente (60, 70, 80) zu bilden, um den Rotor (20) in den Zustand zu versetzen, verschiedenartige Getreide zu behandeln zu können.

2. Rotor nach Anspruch 1, dadurch gekennzeichnet, daß die genannten Ansätze (35) eine Öffnung (46) in einer Oberseite derselben haben, die mit den genannten Verbindungsmitteln (67, 68, 69) zusammenwirkt.

3. Rotor nach Anspruch 2, dadurch gekennzeichnet, daß jedes der Dreschelemente (60, 70, 80) eine Innenseite von im wesentlichen komplementärer Konfiguration mit den Ansätzen und eine das Verbindungsmittel aufnehmende Öffnung (64) zwischen der genannten Innenseite und der Außenseite derselben aufweist, wobei die das Verbindungsmittel aufnehmende Öffnung (64) mit der genannten Ansatzöffnung (46) fluchtet, wenn das Element auf dem genannten Ansatz (35) betriebsmäßig positioniert ist.

4. Rotor nach Anspruch 3, dadurch gekennzeichnet, daß die genannten Verbindungsmittel aus Schraubenbolzen und Muttern (67, 69) bestehen, wobei die genannten Ansätze (35) eine Öffnung (46) in einer Wand derselben aufweisen, um einen Zugang für die Verbindung und Trennung einer Mutter (69) und Bolzen (67) -Verbindung vorzusehen.

5. Rotor nach Anspruch 3, dadurch gekennzeichnet, daß die genannten Dreschelemente (60) aus kurzen geraden Blöcken (60) mit einer äußeren Raspelfläche (62) bestehen, wobei jeder der genannten kurzen geraden Blöcke mit einem einzigen Ansatz (35) verbindbar ist.

6. Rotor nach Anspruch 5, dadurch gekennzeichnet, daß die kurzen geraden Blöcke (60) einen Dorn (61) aufweisen, der von der genannten äußeren Raspelfläche (62) als Ganzes hervorsteht.

7. Rotor nach Anspruch 3, dadurch gekennzeichnet, daß die Dreschelemente sich längs erstreckende gerade Blöcke (70) mit einem Paar innerer Seiten und die Verbindungsmittel aufnehmender Öffnungen (74) umfassen, wobei die sich längs erstreckenden geraden Blöcke mit einem in Längsrichtung fluchtenden Paar von Ansätzen (35) verbindbar sind.

8. Rotor nach Anspruch 7, dadurch gekennzeichnet, daß die sich längs erstreckenden geraden Blöcke (70) auf der Außenseite derselben eine Raspel (71) aufweisen.

9. Rotor nach Anspruch 3, dadurch gekennzeichnet, daß die Dreschelemente sich längs erstreckende schraubenförmige Blöcke (80) mit einem Paar Innenseiten und Verbindungsmittel aufnehmenden Öffnungen (88) aufweisen, wobei die schraubenförmigen Blöcke (80) mit einem schraubenförmig ausgerichteten Paar der genannten Ansätze (35) verbindbar sind.

10. Rotor nach Anspruch 9, dadurch gekennzeichnet, daß die schraubenförmigen Blöcke (80) auf der Außenseite derselben eine Raspel (81) aufweisen.

**Revendications**

1. Cylindre (20) pour une moissonneuse -batteuse à batteur tournant ou analogue, comportant un tambour (22) de forme générale cylindrique définissant une portion de paroi extérieure (24) et une pluralité de moyens de montage fixés à la surface de ladite portion de paroi et des moyens de connexion (67, 68, 69) pour connecter, de façon détachable, les éléments (60, 70, 80) du batteur auxdits moyens de montage, ce par quoi on peut convertir le cylindre (20) pour traiter des récoltes différentes de la façon désirée sur tout l'axe longitudinal dudit cylindre (20), caractérisé en ce que lesdits moyens de montage comportent des bossages individuels (35) rigidement fixés à la surface dudit tambour et en débordant extérieurement et forment des distributions de rangées hélicoïdales (52), de rangées circonférentielles (54) et de rangées longitudinales (56), les éléments (60, 70, 80) du batteur pouvant être connectés, de façon interchangeable et détachable, auxdits bossages individuels (35) pour former, à la demande, des orientations longitudinales, circonférentielles, hélicoïdales, ou des combinaisons de ces orientations, de ces éléments (60, 70, 80) du batteur pour conditionner le cylindre (20) pour traiter des récoltes différentes.

2. Cylindre selon la revendication 1, caractérisé par le fait que lesdits bossages (35) présentent une ouverture (46), formée à leur surface supérieure, adaptée à coopérer avec lesdits moyens de connexion (67, 68, 69).

3. Cylindre selon la revendication 2, caractérisé par le fait que chacun desdits éléments (60, 70, 80) du batteur comporte une surface intérieure de configuration substantiellement complémentaire de la surface desdits bossages, ainsi qu'une ouverture (64) de réception des moyens de connexion, entre ladite surface intérieure et sa surface extérieure, ladite ouverture (64) de réception des moyens de connexion étant alignée avec ladite ouverture (46) du bossage lorsque l'élément est placé sur ledit bossage (35) de façon à pouvoir agir.

4. Cylindre selon la revendication 3, caractérisé par le fait que lesdits moyens de connexion comportent des vis et des écrous (67, 69), lesdits bossages (35) présentent une ouverture (46) dans une de leurs parois pour donner accès pour connecter et déconnecter un écrou (69) et une vis (67) appariés.

5. Cylindre selon la revendication 3, caractérisé par le fait que lesdits éléments (60) du batteur comportent de courts barreaux droits (60) présentant une surface extérieure (62) formant râpe, chacun desdits courts barreaux droits pouvant être connecté à un unique bossage (35).

6. Cylindre selon la revendication 5, caractérisé par le fait que lesdits courts barreaux droits (60) comportent un crampon (61) qui, d'une pièce avec eux, déborde de ladite surface extérieure (62) formant râpe.

7. Cylindre selon la revendication 3, caractérisé par le fait que lesdits éléments du batteur comportent des barreaux droits de forme allongée (70) présentant une paire desdites surfaces intérieures et desdites ouvertures (74) de réception des moyens de connexion, lesdits barreaux droits de forme allongée pouvant être connectés à une paire desdits bossages (35) alignés longitudinalement.

8. Cylindre selon la revendication 7, caractérisé par le fait que lesdits barreaux droits de forme allongée (70) présentent une râpe (71) sur leur surface extérieure.

9. Cylindre selon la revendication 3, caractérisé par le fait que lesdits éléments du batteur comportent des barreaux hélicoïdaux de forme allongée (80) présentant une paire desdites surfaces intérieures et desdites ouvertures (88) de réception des moyens de connexion, lesdits barreaux hélicoïdaux (80) pouvant être connectés à une paire desdits bossages (35) alignés en hélice.

10. Cylindre selon la revendication 9, caractérisé par le fait que lesdits barreaux hélicoïdaux (80) présentent une râpe (81) sur leur surface extérieure.

FIG. 1

12

10

20

14

16

FIG. 2

32

35

20

24

26

28

30

FIG. 3

36

35

FIG. 4

60

68

60

44

46

35

24

38

48

42

40

50

68

50

69

# FIG. 5

FIG. 11

FIG. 6

FIG. 7

FIG. 10

FIG. 8

FIG. 9

FIG. 16

FIG. 12

FIG. 17

FIG. 13

FIG. 14

FIG. 15